# EUROPEAN PATENT APPLICATION

(11) **EP 1 973 143 A1**
(43) Date of publication of application: **24.09.2008**
(21) Application number: 07450052.1
(22) Date of filing: 20.03.2007
(51) Int. Cl.: H01J 49/16

(54) **Process for the sample preparation of biomolecules prior to ms**

(71) Applicant: Universität Innsbruck, 6020 Innsbruck (AT)
(72) Inventor: Bonn, Günther, 6170 Zirl (AT); Bakry, Rania, 6020 Innsbruck (AT); Huck, Christian W., 6020 Innsbruck (AT); Vallant, Rainer, 6020 Innsbruck (AT); Szabo, Zoltan, 7632 Pécs (HU)
(74) Representative: Schwarz, Albin

(57) **Abstract**

The invention relates to a process for the the sample preparation of biomolecules in biological samples prior to mass spectrometry, wherein the sample is subjected to solid-phase extraction (SPE) prior to MS analysis. According to the invention, the SPE extraction is carried out with a fullerene-derivatised sorbent material selected from the group consisting of silica and polymers, thereby enabling desalting and concentration of small peptides and phosphopeptides with high efficiency.

## Description

The present invention relates to a process for the sample preparation of biomolecules including phosphopeptides, peptides, proteins, metabolites etc., in biological samples prior to mass spectrometry, e.g., matrix-assisted laser desorption/ionization mass spectrometry (MALDI-MS), wherein the sample is subjected to solid-phase extraction (SPE) prior to MS analysis.

Mass spectrometry is a powerful instrumental technique for protein identification and characterization. Matrix-assisted laser desorption/ionization time-of-flight mass spectrometry (MALDI-TOF/MS) is widely used for the analysis of proteins and peptide mixtures. In proteomics, this powerful technique is frequently used for protein identification based on the comparison of experimentally measured molecular masses of enzyme-derived peptides with theoretical digests of primary protein structures obtained from databases [1],[2],[3].

Many samples for MALDI-TOF/MS, mainly of biological origin, are well known to be complex mixtures of proteins with a wide range of molecular masses, salts and other compounds. These components have a strong influence on the quality of mass spectra and sometimes completely suppress the MALDI-TOF signal [4], [5]. Due to the complexity of these samples, it is advantageous to separate the samples into several fractions.

Size-exclusion [6],[7],[8], ion exchange [9],[10],[11],[12] and affinity chromatography [13],[14],[15],[16] can be used as techniques for the separation of protein mixtures. However, separation of proteins by the above mentioned techniques often requires mobile phases with higher ionic strength. The separated protein fractions contain thus large amounts of salts, and therefore purification steps (e.g. reversed-phase liquid chromatography) must be implemented in sample preparation prior to the determination of molecular masses by MALDI-TOF/MS [17],[18],[19].

Peptide mass fingerprinting (PMF) plays a very important role in the identification of proteins. In this method, separated proteins are subjected to enzymatic cleavage and the peptide molecular masses determined by a proper mass spectrometric technique are submitted to a database search program that identifies the protein within a selected protein database. Because original protein samples often contain salts and, moreover, the digestion of proteins involves addition of salts, a suitable desalting procedure is again necessary for obtaining high-quality mass spectra of enzymatic digests as in the case of the MS analysis of intact proteins [20],[21].

Several methods have been reported for sample purification prior to MS analysis. These include dialysis [22],[23], ultrafiltration [24],[25],[26], size-exclusion, affinity purification, and solid-phase extraction (SPE). Ultrafiltration and size-exclusion spin columns do not provide a sufficient degree of desalting for MS. Dialysis allows for a high degree of desalting, but it is difficult and expensive to automate. SPE with reversed phase chromatography is therefore the common strategy to desalt and concentrate protein and peptides samples. Mainly, Silica C18 is used for desalting. However, this does not allow the detection of small or hydrophilic peptides, or peptides altered in hydrophilicity such as phosphopeptides.

Other chromatographic materials such as hydrophilic interaction, immobilized metal affinity chromatography or porous graphite carbon (PGC) material have been proposed for purifying those categories of peptides prior to MS. PGC columns are normally used to purify carbohydrates and glycopeptides, but have recently been shown to be useful as an alternative or supplement to traditional RP chromatography for separation of small and hydrophilic peptides prior to MALDI-MS analysis, nonetheless with lower sensitivity.

Accordingly, there is a need to develop and optimize purification procedures for biomolecules, in particular peptides and proteins, in a broad molecular mass range for improvement of the identification of the biomolecules in chromatographic fractions containing high concentrations of salts based on MS analyses of both intact proteins and their tryptic digests.

It is therefore the object of the present invention to provide a process for the sample preparation of biomolecules in biological samples prior to mass spectrometry, which overcomes the drawbacks of the known procedures and allows to desalt and concentrate even small peptides and phosphopeptides with high efficiency, in order to improve MS analysis outcome.

This object is achieved by a process of the initially mentioned kind, which is characterized in that the SPE extraction is carried out with a fullerene-derivatised sorbent material selected from the group consisting of silica and polymers.

Preferably, the polymers are selected from the group consisting of styrene-based, acrylate-based, dextran, cellulose, agarose and sepharose polymers.

According to a preferred embodiment, the fullerene-derivatised silica is selected from the group consisting of a fullerene-bonded silica resulting from the reaction of aminopropyl silica and [60]fullerenoacetyl chloride and a fullerene-bonded silica resulting from the reaction of aminopropyl silica and [60]epoxy fullerene.

Preferably, the silica has a pore size in the range of 0 (= non-porous) - 100 nm.

C60-aminosilica and C60-aminopolymers have proven to have excellent features toward the SPE applications of different molecules. As it is demonstrated herein, the newly developed fullerene-derivatised material is comparable with SPE materials having already been available on the market. The fullerene-derivatised material is a highly useful SPE sorbent material which shows reversible interactions between analytes with low masses such as flavanoids and peptides.

Characterisation of the prepared materials made from silicas having different pore size shows that it is essential to start from silica with high enough pore size to maintain the pore structure (porosity and pore volume) in the derivatives. A very interesting property of the new sorbent material is its ability to bind phosphorylated peptides, which makes it a promising alternative for the binding and selective enrichment of phosphopeptides, since these compounds are well known to be present in very low concentration in different biological system. The utilization of the C60-aminosilica/aminopolymers in columns for liquid chromatography is also envisaged.

The invention will be illustrated and described in more detail by way of the following examples. It is noted, however, that, although the examples only refer to silica materials, the used procedures described hereunder are also analogously applicable to (amino)polymers.

### Examples

### Chemicals and reagents

[C60]-fullerene (≥99.5 %) was purchased from MER corporation, (Tucson, AZ, USA). Triethylamine (99.5 %), aminopropyl-trimethoxysilane (97.0 %), 3- chloroperoxybenzoic acid (70-75 % balance), α-cyano-4-hydroxycinnamic acid (HCCA, ≥99.0 %),sinapinic acid (SA, ≥99.0 %), trifluoroacetic acid (≥99.0 %), sodium sulphate anhydrous (99.0 %), toluene (99.0 %), tetrahydrofuran (THF, ≥99.9 %), silica gel 60 (pore size 60 Å, 200-425 mesh, ≥98.5%), methanol (≥99.8%), sodium chromate tetrahydrate (99.0 %), di-sodium hydrogen phosphate dihydrate (99.5 %), ortho-phosphoric acid (85.0 %), ammonium hydroxide (25.0 %), sodium hydroxide (99.5 %), acetonitrile (99.5 %), insulin, ubiquitin (≥90.0 %), myoglobin (≥95.0 %), bradykinin (≥98.0 %), 6-hydroxyflavone (≥98.0 %), biochanin A (≥97.0 %), hesperetin (≥95.0 %) and naringenin (≥95.0 %) were supplied by Sigma-Aldrich (Vienna, Austria).

Tryptic digest of bovine serum albumin (BSA) was purchased from Bruker (Bruker Daltonics, Bremen, Germany). Synthetic phosphopeptides: DpSEGRGpSGDPGK (M+H)⁺ =1321.45 Da, and VYGKTpSHLR (M+H)⁺ = 1140.56 Da were purchased from Bachem (Weil am Rhein, Germany). Kovasil 100A-5 (100 Å, 5 µm) silica gel was purchased from Zeochem AG (Uetikon, Switzerland). GromSIL 1000 Si (1000 Å, 5 µm) silica gel was obtained from Grom Analytik (Rottenburg-Hailfingen, Germany) and ProntoSil 300-5-Si (300 Å, 5 µm) was purchased from Bischoff Analysentechnik und Geräte GmbH (Leonberg, Germany). Water purified by a NanoPure-unit (Bamstead, Boston, MA, USA) was used for all experiments.

### Synthesis of C60-aminosilica

The synthesis of C60-bonded silica was carried out with silica material having 3 different pore sizes (Kovasil 100-5-Si: 100 Å, 5 µm; ProntoSil 300-5-Si: 300 Å, 5 µm; and GromSil 1000-5-Si: 1000 Å, 5 µm). The silica sorbents were derivatized with an aminopropyl linker as described by Pesek *et al.* Two different functionalised fullerenes, namely, [60]fullerenoacetic acid and C60-epoxyfullerenes, were utilized. Details on the reaction conditions can be found in [28].

### Sample preparation SPE

For all solid phase extraction experiments 5 mg C60-aminosilica material was placed into a 500 µl Eppendorf tube. The activation, equilibration and washing steps were done by shaking the suspension at 1400 rpm with a thermomixer for 3 min at room temperature. This was followed by centrifugation at 13000 rpm. The flow-through, washing steps and elution were investigated with MALDI-TOF/TOF MS (Bruker Daltonics, Bremen, Germany).

SPE material from Waters, Oasis HLB (m-Divinylbenzene & N-vinylpyrrolidone copolymer), and Sep-Pak (silica-based C18) as well as SPE material from Millipore (ZipTip silica-based C18) were used for the comparative study. The solid phase extraction protocol was adopted according to M. Gilar *et al.* [29].

### Solid phase extraction of peptides

5 mg C60-aminosilica was activated by suspending in 200 µl acetonitrile (ACN) in the presence of 0.1 % trifluoroacetic acid (TFA) and ultrasonified for 5 min. After removing the supernatant, particles were equilibrated with 200 µl PBS buffer. C60-aminosilica was loaded with 200 µl of three different peptide solutions, diluted in PBS and incubated for 5 min. at 27°C. The first solution was a mixture of insulin and bradykinin, concentrations ranging from 50 - 1000 µg/ml, used for quantitative analysis. The second one was a peptide mixture containing angiotensin I, angiotensin II, substance P, bombesin, renin substrate, ACTH clip 1-17 and ACTH clip 18-39 with a concentration of 50 µg/ml, for qualitative analysis with MALDI-TOF MS. The third solution was a bovine serum albumin tryptic digest, (100 µg/ml) employed for data searching against Swiss-Prot using Mascot (MatrixScience).

The non-bound peptides were washed three times with 200 µl PBS buffer and desalted with 200 µl water. Finally, the peptides were eluted from SPE sorbent using 50 µl 80% ACN in 0.1% TFA solution. The eluted peptides were analysed with MALDI-TOF MS. Insulin and bradykinin were quantified with RP-HPLC system from Bischoff modular HPLC instrument (Leonberg, Germany), equipped with a micropump (model 2250), a vacuum degasser (CSI 6150) and a photodiode array detector (LAMDA 1010). The column, purchased from Sigma-Aldrich (4.6mm x 100mm) was packed with Hypersil-ODS silica material (endcapped, 3 µm). Mc DAcq32 Data acquisition software was used. All analyses were carried out at a mobile phase flow rate of 1 ml/min. The peptides of interest were detected at 220 nm. Quantification was performed with the following mobile phase compositions. For insulin: eluent A (80% 1/15 M KH₂PO₄, pH = 2.1, 20 % ACN) and eluent B (60% 1/15 M KH₂PO₄, pH = 2.1, 40 % ACN) were used for the following linear gradient elution: from 35 % B to 100% B within 20 min. For the quantification of bradykinin eluent A (99 % H₂O, 1 % ACN, 0.1 % TFA) and eluent B (99 % ACN, 1 % H₂O, 0.1 % TFA) were applied in the following gradient: from 15 % B to 100 % B in 20 min.

### Solid phase extraction of phosphopeptides

The activation of C60-aminosilica was carried out first with 200 µl of 0.1% TFA in ACN, and then with 200 µl of 0.1% TFA in 1:1 acetonitrile/water. In a third step, the material was equilibrated twice with 0.1 % TFA. The activated and equilibrated C60-aminosilica was then incubated with 200 µl of phosphopeptides dissolved in PBS (50 - 1000 µg/ml) for 5 min at 27°C, followed by three washing steps with 5% ACN/0.1% TFA in water. The bound contents were eluted with 50 µl of 1: 9: 90, H₃PO₄: H₂O: ACN. Phosphopeptides were quantified with HP3D-CE-System (Agilent Technologies, Waldbronn, Germany) equipped with a diode-array detector. Data processing was carried out with HP^{3D}-CE Chemstation (Rev. A.06.03, Agilent Technologies, Waldbronn, Germany) software package. A polyimide coated fused silica capillary, (50 µm i.d. and 360 µm o.d.) Polymicro Technologies (Phoenix, AZ, SA) was used for separation.

The phosphopeptides were detected at a wavelength of 192 nm. All separations were performed by applying -30 kV at 22°C. Phosphopeptides were injected by hydrodynamic injection at 50 mbar for 4 s. The capillaries with a total length of 68 cm and an effective length of 59.5 cm were conditioned by flushing with 0.1 M NaOH (for 20 min) followed by water (for 15 min). Finally, the conditioning procedure was completed by flushing with background electrolyte (BGE) for 20 min. Prior to each run the capillary was purged (50 mbar) with the separation BGE for 5 min. BGE was prepared from 20 mM of di-sodium hydrogen phosphate dihydrate (Na₂HPO₄·2H₂O) dissolved in water. pH was adjusted to 2.5 with 85% ortho-phosphoric acid. 0.001% HDB was added as EOF modifier to the electrolyte for co-EOF mode.

### Solid phase extraction of flavanoids

C60-aminosilica was activated with 2 ml methanol and washed afterwards with 1ml water. The sample was loaded with 40 µg/ml flavanoids standard dissolved in 0.1 M phosphate buffer, pH 2.4. After loading 3 wash steps with 1 ml water were carried out, followed by the elution with 1 ml ACN. The separation and quantification was carried out using CE method according to Bachmann *et al* [28]. Hesperetin and naringenin were detected by UV-detector at 214 nm wavelength whereas 6-hydroxyflavone and biochanin A were detected at 254 nm. BGE was prepared from sodium chromate tetrahydrate with a concentration of 1 mM by dissolving in water. pH was adjusted to 9.5 with ammonium hydroxide. All separations were performed by applying +30 kV at 22°C.

### Solid phase extraction of proteins

Insulin, ubiquitin and myoglobin were dissolved in PBS to get a protein mixture of 100 µg/ml concentration. The activation, loading, washing and elution were carried out according to the protocol mentioned above for SPE of peptides.

### Matrix-assisted laser desorption/ionization mass spectrometry (MALDI-MS)

Mass spectra were recorded on Ultraflex II MALDI-TOF/TOF MS, (Bruker Daltonics, Bremen, Germany), operated in reflector mode for the analysis of peptides and characterization of fullerene derivatives and in linear mode for the analysis of proteins. 0.5 µl of the samples were placed onto a stainless steel target (MTP 384 target ground steel TF, Bruker Daltonics) with 0.5 µl matrix (HCCA for peptide and SA for protein analysis). All spectra were recorded by summing 400 laser shots. The laser power was adjusted between 30-50% of its maximal intensity, using a 337 nm nitrogen laser having a pulse of 50 Hz. The instrument was calibrated externally using the peptide calibration standard II, purchased from Bruker. The Flex Analysis version 2.4 software packages provided by the manufacturer were used for data processing.

### Results

### Characteristics of the C60-aminosilica materials

Different synthetic approaches were designed and investigated with elemental analysis to achieve maximum C60-functionalization on silica. This was carried out by measuring the increase in carbon content. In the first approach the reaction of underivatized fullerenes with either silica (ProntoSil 300-5-Si) or aminosilica showed no increase in carbon content. As a next step, derivatized fullerenes, namely epoxyfullerenes were added to pure silica, which led to carbon content of 6.1 %. However the highest carbon content was achieved when derivatized fullerenes, i.e., epoxyfullerenes and [60]fullerenoacetic acid, were reacted with aminosilica producing 17.54 % and 11.3 % carbon content, respectively. Both fullerene precursors led to similar products, however the mechanism of [60]fullerenoacetic acid is a nucleophilic addition, whereas epoxyfullerenes underwent an epoxide ring opening. Comparing the C60 surface coverage calculated from elemental analysis, it can be seen that epoxyfullerenes possess higher reactivity towards aminosilica than the counterpart [60]fullerenoacetic acid. Epoxyfullerenes have a C60 surface coverage of 2.9 mg C60/m² versus [60]fullerenoacetic acid having 1.2 mg C60/m². These values as well as the carbon content and specific surface areas are reported elsewhere in detail [30]. The parameters like polarity and specific surface area of the sorbent are both influencing the retention of compounds.

C60-derivatized silica materials with different pore sizes (100 Å, 300 Å and 1000 Å) were investigated. Physical properties such as surface area, C60 coverage and change in pore size before and after derivatization were measured. To investigate the change in surface area, a classical effective method named BET was utilized. There was ± 20 % decrease in surface area for all kinds of silica after addition of aminopropyl linker. On the other hand an increase of 25-30 % in surface area was observed after aminosilica was derivatized with fullerenes (increase of 15 [m²/g] for Kovasil 100 Å and 32.5 [m²/g] for Prontosil 300 Å and 8.1 [m²/g] for Gromsil 1000 Å). Mercury intrusion porosimetry (MIP) gave an insight into the change of average pore radius and volume. Considering these results one can observe that the pore volume was decreased immensely from 10 mm³/g to zero for Kovasil 100 and from 575 mm³/g to 300 mm³/g for Prontosil 300. The pores of 100 Å silica are blocked to a great extent by C60-fullerene (70Å). This observation was further confirmed by the decrease of average pore radius, namely from 120 Å to 0 Å (unmeasurable). In case of 300 Å silica, the volume is decreased by half, leading to the conclusion that pores are half filled with fullerenes (see Table I for the summarized results). Epoxyfullerenes were chosen as starting material for different pore sized silica derivatizations, due to their easy handling, less time consumption and cost efficiency.

**Table I: Characterisation of silica gels used in this study (data acquired by the manufacturers) and characterisation of the aminopropyl silica and the fullerene derivatives**

| **Name** | **specific surface** | **average pore** | **average pore** | **surface coverage** | **Carbon** |
|---|---|---|---|---|---|
| | **area [m²/g]** | **radius [µm]** | **volume [mm³/g]** | **(µmol/m²)** | **content (%)** |
| Kovasil | 100305 | 120 Å | 770 | 0 | 0 |
| Kovasil 100-NH₂ | 250 | <36 Å | 10 | 3.2 | 3.14 |
| Kovasil 100-NH₂-C60 | 265 | 0 | 0 | 0.88 | 16.82 |
| | | | | | |
| ProntoSil 300 | 79.7 | 300 Å | 1050 | 0 | 0 |
| ProntoSil 300-NH₂ | 81.5 | 115 Å | 575 | 3.43 | 1.18 |
| ProntoSil 300-NH₂C60 | 114 | 130 Å | 300 | 2.91 | 17.54 |
| | | | | | |
| GromSIL 1000 | 30 | 1000 Å | 110 | 0 | 0 |
| GromSIL 1000-NH₂ | 81.5 | - | - | 3.66 | 0.39 |
| GromSil 1000-NH₂C60 | 114 | - | - | 2.27 | 5.01 |

### Applications of C60-aminosilica materials

The majority of SPE sorbents is prepared from silica, which can easily be chemically modified, therefore it is quite easy to obtain reversed phase (RP) (C18; C8; C2; Ph; CH) and normal phase sorbents (CN; NH₂; OH). Elemental carbon is also commonly used as SPE sorbent as graphitized carbon blacks (GCBs) and porous graphitic carbon (PGC). Combination of these two SPE sorbents in C60-aminosilica produced new promising properties. The results were compared with commercially available SPE materials from Waters (HLB Oasis), Sep-Pak (silica based C18) and ZipTip (reversed phase, silica based material) from Milipore.

### Solid phase extraction of peptides

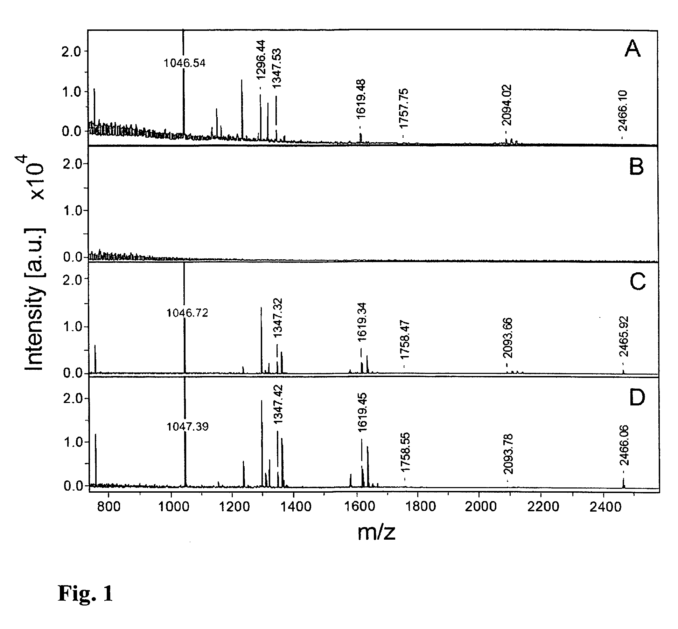

Interactions between peptides with different polarities and C60-aminosilica were investigated. A mixture of 6 peptides at concentration of 50 µg/ml was loaded onto C60-aminosilica. For reference measurement, 0.5 µl from this solution was placed as such on a stainless steel target, mixed with appropriate matrix and measured (Figure 1A). The corresponding masses for peptides (M+H)⁺ are: 1046.54 (angiotensin II), 1296.44 (angiotensin I), 1347.53 (substance P), 1619.34 (bombesin), 1757.75 (renin substrate), 2094.02 (ACTH clip 1-17) and 2466.68 (ACTH clip 18-39), respectively.

After loading 5 mg C60-aminosilica with 200 µl of the above mentioned solution of peptides, a complete adsorption of peptides can be observed. There is no trace present in the flow-through as it can be seen in Figure 1B. A comparative study of peptide mapping eluted from two different pore sized C60-aminosilica can be found in Figure 1C (100 Å) and Figure 1D (1000 Å). In both cases all peptides could be eluted as they have appeared in the spectra. These results only provide qualitative information about binding properties of these materials and are not related to the binding capacity. It is shown that peptides with higher polarity have the ability to be adsorbed on the surface of material covered with fullerene molecules. A more detailed and comprehensive capacity study of eluates was carried out and is discussed later.

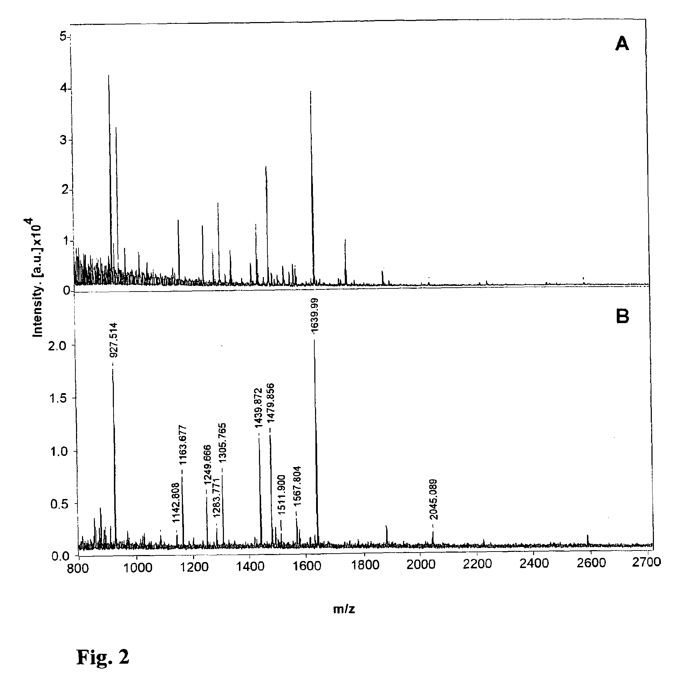

A Mascot search data library was engaged to investigate the potential of this material for biological applications. The material was loaded with BSA digest containing peptides of large diversity, in order to see how many of the eluted peptides could be identified. This experiment supplied the evidence that C60-aminosilica has a strong reversible binding affinity to all peptides from BSA digest, which can be followed from Figure 2. The spectrum showed the presence of all 16 peptides, which were present before loading. A Mascot search carried out in this regard resulted in a score of 110. This clearly shows that C60-aminosilica has laid the foundation for successful application of solid phase extraction to peptides.

### Solid phase extraction of proteins

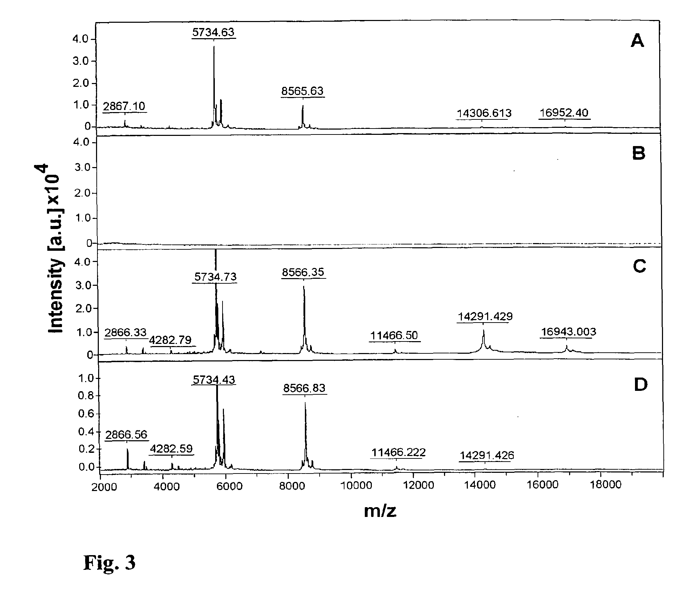

To investigate the application of newly developed C60-aminosilica for biological applications, SPE experiments were carried out with a mixture of three proteins, massesranging from 5734.63 Da to 16952.40 Da. This study is shown in Figure 3A-D for proteins: insulin (2867.10 [M+2H]²⁺ 5734.63 [M+H]⁺, 11466.65 [2M+H]⁺); ubiquitin (4282.92 [M+2H]²⁺, 8565.63 [M+H]⁺) and myoglobin (16952.40 [M+H]⁺). When comparing the intensity of peaks present in Figure 3A (before loading) with the intensity in Figure 3C-D (eluted proteins), a 4 times increase in peak intensity can be observed. This is due to the preconcentration effect, however, it is pointed out that no reasonable quantitative conclusion can be drawn from MALDI-MS spectrum.

### Solid phase extraction of phosphopeptides

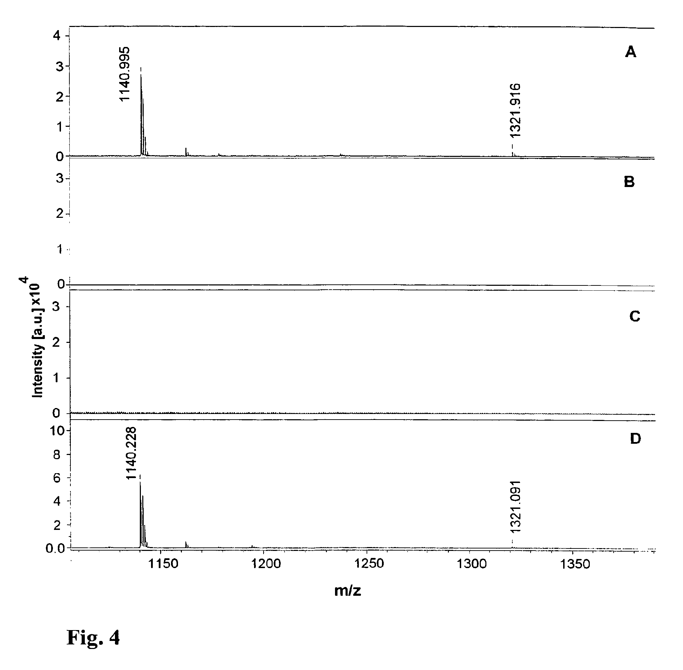

An important observation most often discussed in literature about phosphopeptides is that hydrophilic and highly phosphorylated peptides cannot be desalted from a mixture consisting of inorganic salts, using C18 reversed phase materials, for example ZipTip. Therefore, there is still a need to find a proper sorbent exhibiting abilities to retain phosphopeptides. The elaborated C60-aminosilica possesses excellent features to bind phosphopeptides from PBS buffer solution. That's why it is recommended to use this material for desalting as demonstrated in Figure 4. Two synthetic phosphopeptides (DpSEGRGpSGDPGK (M+H)⁺ =1321.45 Da, and VYGKTpSHLR (M+H)⁺ = 1140.56 Da) were tested. As both OASIS and Sep-Pak are not capable of capturing these two phosphopeptides due to their enhanced polarity, C60-aminosilica has a very strong affinity towards them. Surprisingly, recovery in this concentration range was found to be independent of pore sizes of silica.

From MALDI-TOF mass spectrum in Figure 4A, it can be seen that there is no interaction between the two phosphopeptides and ZipTip, as both phosphopeptides are detected in flow-through. This observation is further supported by Figure 4C where no phosphopeptides are present in elution. In case of C60-aminosilica a complete adsorption of phosphopeptides takes place. As it can be seen in Figure 4B no phosphopeptides are present in the flow-through. Figure 4D shows the two phosphopeptides eluted successfully from the fullerenesilica material

### Recovery studies of C60-derivatised silica in comparison with commercially available products

The OASIS HLB sorbent is a macroporous copolymer of lipophilic divinyl benzene and hydrophilic N-vinyl pyrrolidone. Sep-Pak on the other hand is a hydrophobic, non-polar bonded silica phase with C18 functionalization as sorbent. Both possess excellent loading capacities and recovery rates for numerous compounds including proteins and peptides. However, there is some limitation in their use with hydrophilic peptides. The aim of the recovery study was to receive adequate information on recovery of biomolecules from C60-aminosilica and to compare it with the above mentioned frequently used commercially available products. Recoveries were measured for insulin, bradykinin, synthetic phosphopeptides. The loading and eluting procedures for peptides were accomplished according to the recommendations of M. Gilar *et.al* [29]. In case of insulin the results indicate that a slightly better recovery could be obtained using C60-aminosilica than either for OASIS or Sep-Pak. Nearly 100 % of insulin was recovered when C60-aminosilica was loaded with 30.0 and 50.0 µg of insulin. An overview of the findings is summarized in Tables II and III. Recovery of bradykinin using C60-aminosilica produced comparable results in comparison to OASIS. The same recoveries were calculated for 30.0 µg (C60-aminosilica: 85 %; OASIS: 84 %) and 50.0 µg (C60-aminosilica: 88.4 %, OASIS: 88.6 %).

**Table II: Comparison of recovery values measured on C60-aminosilica, OASIS and Sep-Pak for insulin and bradykinin.**

| Substance Name | Concentration [µg/ml] | Recovery [%] | Recovery [%] | Recovery [%] |
|---|---|---|---|---|
| | loaded | C60-Aminosilica | Sep-Pak C18 | OASIS |
| Insulin | 10 | 72.3 | 79.6 | 72.6 |
| | 30 | 95.5 | 87.4 | 92.8 |
| | 50 | 97.2 | 91.8 | 91.7 |
| Bradykinin | 30 | 85.0 | - | 84.0 |
| | 50 | 88.4 | - | 88.6 |

**Table III: Recovery of a synthetic phosphopeptide**

| SPE-Material | Max capacity [mg/g] |
|---|---|
| C60-Silica-100 | 39,39 |
| C60-Silica-300 | 33,57 |
| C60-Silica-1000 | 26,5 |

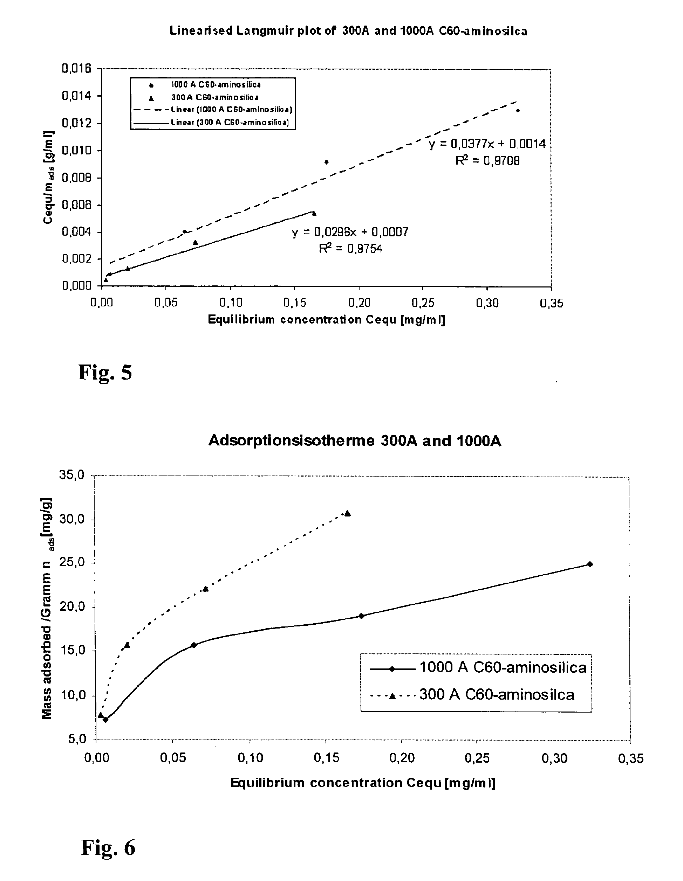

A Langmuir study [31,32] was carried out to calculate the maximum phosphopeptide binding capacity in equilibrium. SPE sorbent gets loaded with concentrations ranging from 200 µg/ml to 1400 µg/ml. The reason for these high concentrations is to achieve an equilibrium between sorbent and substance. The adsorption isotherms of a synthetic phosphopeptide on 300 Å C60 aminosilica and 100 Å C60 aminosilica was measured giving insight into the binding properties of phosphorylated peptides. The results obtained fitted the theoretical model of Langmuir (see Figure 5). The quantity of the adsorbed phosphopeptides in case of saturation was calculated from the reciprocal slope of the straight line when plotting C_{equ}/n_{ads} vs. C_{equ}., where C_{equ} is the concentration in equilibrium and n_{ads} is the amount of phosphopeptides[mg] adsorbed at C_{equ} on the SPE material given in [mg/g].

When plotting the amount adsorbed in equilibrium (m_{ads}) vs. concentration in equilibrium (C_{equ}.) shown in Figure 6 , a slight increase in the amount of phosphopeptides adsorbed on 300 Å aminosilica compared to 1000 Å aminosilica can be observed. This is due to the smaller surface area of 1000 Å aminosilica (see Table III).

Our interest also turned to smaller molecules such as flavanoids. The recovery rates for Sep-Pak, Oasis and C60-aminosilica were investigated with capillary electrophoresis (CE). The material showed outstanding results, having a recovery of 98% of the loaded substance (see Table IV). Sep-Pak showed comparable results, whereas pure silica and OASIS were rather poor.

**Table IV: Comparison of recovery values measured on C60-aminosilica, OASIS and Sep-Pak for flavanoids, insulin and bradykinin**

| Substance Name | Concentration [µg/ml] | Recovery [%] | Recovery [%] | Recovery [%] | Recovery [%] |
|---|---|---|---|---|---|
| | loaded | C60-Aminosilica | Sep-Pak C18 | OASIS | Silica |
| Naringenin | 40 | 99.6 | 99.6 | 23,5 | 0.0 |
| Hesperetin | 40 | 99.7 | 99.4 | 75.5 | 0.0 |
| Biochanin | 40 | 99.6 | 99.6 | 65.3 | 0.0 |
| 6-Hydroxyflavon | 40 | 98.8 | 99.7 | 46.1 | 0.0 |

### Description of Figures:

**Figure 1****:** Mass spectra of eluted peptides solution from C60-aminosilica material. A) Peptide standard measured on target before loading; B) Flow-through; C) Elution of peptides from Kovasil 100 Å NH₂-C60; D) Elution of peptide standard from Prontosil 300 Å C60-aminosilica.
**Figure 2****:** Comparison of an eluted BSA digest with direct measurement, A) BSA digest control; B) BSA digest elution with matching masses shown.
**Figure 3****:** Mass spectra of a solution of proteins eluted from C60-aminosilica, A) Protein standard before loading; B) flow-through; C) Elution Kovasil 100 Å C60-aminosilica; D) Elution Prontosil 300 Å C60-aminosilica.
**Figure 4****:** Comparison of the results of an SPE experiment carried out on both C60-aminosilica and Zip-Tip, A) flow-through Zip tip; B) flow-through Prontosil 300 Å C60-aminosilica; C) Elution Zip Tip; D) Elution Prontosil 300 Å C60-aminosilica.
**Figure 5****:** Linearised Langmuir plot of a synthetic phosphopeptide using 300 Å and 1000 Å C60-aminosilica. Slopes shown in figure are used to calculate max binding capacity.
**Figure 6****:** Adsorption isotherms of a synthetic phosphopeptide 300 Å C60-aminosilica vs 1000 Å C60-aminosilica.

### References

¹ Flensburg, J.; Liminga, M. Proteomics Protocols Handbook; 2005; pp 325-340.
² Krokhin, O. V.; Craig, R.; Spicer, V.; Ens, W.; Standing, K. G.; Beavis, R. C.; Wilkins, J. A., Molecular and Cellular Proteomics 2004, 3, 908-919.
³ Wuhrer, M.; Hokke, C. H.; Deelder, A. M., Rapid Communications in Mass Spectrometry 2004, 18, 1741-1748.
⁴ Yao, J.; Scott, J. R.; Young, M. K.; Wilkins, C. L., Journal of the American Society for Mass Spectrometry 1998, 9, 805-813.
⁵ Keller, B. O.; Li, L., Journal of the American Society for Mass Spectrometry 2000, 11, 88-93.
⁶ Bublitz, R.; Kreusch, S.; Ditze, G.; Schulze, M.; Cumme, G. A.; Fischer, C.; Winter, A.; Hoppe, H.; Rhode, H., Proteomics 2006, 6, 3909-3917.
⁷ Salplachta, J.; Rehulka, P.; Chmelik, J., Journal of Mass Spectrometry 2004, 39, 1395-1401.
⁸ Ottens, M.; Houwing, J.; Van Hateren, S. H.; Van Baalen, T.; Van Der Wielen, L. A. M., Food and Bioproducts Processing 2006, 84, 59-71.
⁹ Moure, F.; Rendueles, M.; Diaz, M., Bioprocess and Biosystems Engineering 2004, 27, 17-24.
¹⁰ Shin, J.-H.; Krapfenbauer, K.; Lubec, G., Electrophoresis 2006, 27, 2799-2813
¹¹ Pepaj, M.; Wilson, S. R.; Novotna, K.; Lundanes, E.; Greibrokk, T., Journal of Chromatography, A 2006, 1120, 132-141*.*
¹² Yamakoshi, Y.; Hu, J. C. C.; Zhang, H.; Iwata, T.; Yamakoshi, F.; Simmer, J. P., European Journal of Oral Sciences 2006, 114, 266-271.
¹³ Gong, Y.; Li, X.; Yang, B.; Ying, W.; Li, D.; Zhang, Y.; Dai, S.; Cai, Y.; Wang, J.; He, F.; Qian, X., Journal of Proteome Research 2006, 5, 1379-1387.
¹⁴ Guerrier, L.; Thulasiraman, V.; Castagna, A.; Fortis, F.; Lin, S.; Lomas, L.; Righetti, P. G.; Boschetti, E., Journal of Chromatography, B: Analytical Technologies in the Biomedical and Life Sciences 2006, 833, 33-40.
¹⁵ Paunovic, I.; Schulin, R.; Nowack, B., Journal of Chromatography, A 2005, 1100, 176-184.
¹⁶ Bakry, R.; Gjerde, D.; Bonn, G. K., Journal of Proteome Research 2006, 5, 1321-1331.
¹⁷ Hynek, R.; Svensson, B.; Jensen, O. N.; Barkholt, V.; Finnie, C., Journal of Proteome Research , ACS ASAP.
¹⁸ de Bont, J. M.; den Boer, M. L.; Reddingius, R. E.; Jansen, J.; Passier, M.; van Schaik, R. H. N.; Kros, J. M.; Sillevis Smitt, P. A. E.; Luider, T. H.; Pieters, R., Clinical Chemistry (Washington, DC, United States) 2006, 52, 1501-1509.
¹⁹ Linke, T.; Ross, A. C.; Harrison, E. H., Journal of Chromatography, A 2006, 1123, 160-169.
²⁰ Xu, S.; Ye, M.; Xu, D.; Li, X.; Pan, C.; Zou, H., Analytical Chemistry 2006, 78, 2593-2599.
²¹ Leite, J. F.; Hajivandi, M. R.; Diller, T.; Pope, R. M., Rapid Communications in Mass Spectrometry 2004, 18, 2953-2959
²² Linnemayr, K.; Rizzi, A.; Josic, D.; Allmaier, G., Analytica Chimica Acta 1998, 372, 187-200.
²³ Wu, Q.; Liu, C.; Smith, R. D., Rapid Communications in Mass Spectrometry 1996, 10, 835-838.
²⁴ Tessier, B.; Harscoat-Schiavo, C.; Marc, I., Journal of Agricultural and Food Chemistry 2006, 54, 3578-3584.
²⁵ Chemokalskaya, E.; Kavonian, M., American Biotechnology Laboratory 2004, 22, 20, 22. ²⁶ Schratter, P., Methods in Molecular Biology (Totowa, NJ, United States) 2004, 244, 101-116.
²⁷ B. Buszewski, M. Jezierska-Switala, R. Kaliszan, A.Wojtczak, K. Albert, S. Bachmann, M. T. Matyska, J. J. Pesek, Chromatographia (2001), 53(Suppl.), S204-S212
²⁸ S. Bachmann, R. Bakry, C.W. Huck, G.K. Bonn, Electrophoresis, 2007, 28,
²⁹ M. Gilar, A. Belenky, B. H. Wang, Journal of Chromatography A 2001, 921, 3-13
³⁰ L. Trojer, G. Stecher, I. Feuerstein, G. K. Bonn, Rapid Communications in Mass Spectrometry 2005, 19(22), 3398-3404
³¹ I. Langmuir, J. Am. Chem. Soc. 1918; 40: 1361.

## Claims

1. A process for the the sample preparation of biomolecules in biological samples prior to mass spectrometry, wherein the sample is subjected to solid-phase extraction (SPE) prior to MS analysis, **characterized in that** the SPE extraction is carried out with a fullerene-derivatised sorbent material selected from the group consisting of silica and polymers.

2. The process according to claim 1, wherein the polymers are selected from the group consisting of styrene-based, acrylate-based, dextran, cellulose, agarose and sepharose polymers.

3. The process according to claim 1, wherein the fullerene-derivatised silica is selected from the group consisting of a fullerene-bonded silica resulting from the reaction of aminopropyl silica and [60]fullerenoacetyl chloride and a fullerene-bonded silica resulting from the reaction of aminopropyl silica and [60]epoxy fullerene.

4. The process according to claim 1 or 3, wherein the silica has a pore size in the range of 0-100 nm.
